# EUROPEAN PATENT SPECIFICATION

(11) **EP 3 142 466 B1**
(45) Date of publication and mention of the grant of the patent: **18.12.2019**
(21) Application number: 16275119.2
(22) Date of filing: 26.08.2016
(51) Int. Cl.: H05B 33/08, F21V 17/00, F21V 17/16, H02J 9/06, F21K 99/00, F21V 17/14, F21V 1/00

(54) **LIGHTING ARRANGEMENT WITH BATTERY BACK-UP**
BELEUCHTUNGSEINRICHTUNG MIT NOTSTROMBATTERIE
ARRANGEMENT D'ÉCLAIRAGE AVEC BATTERIE DE SECOURS

(30) Priority: 27.08.2015 US 201562210464 P
(43) Date of publication of application: 15.03.2017
(73) Proprietor: CP IP Holdings Limited, Central Hong Kong (HK)
(72) Inventor: BOULANGER, Dave, Pok Fu Lam (HK); NOWAKOWSKI, Maciej, West Vancouver, British Columbia V7W3C9 (CA)
(74) Representative: Higgs, Jonathan

(56) References cited:
- GB-A- 2 500 797
- JP-A- 2011 190 090
- US-A- 6 082 871
- US-A1- 2008 119 273
- US-A1- 2012 187 852
- US-A1- 2012 261 992
- US-A1- 2013 342 342
- US-A1- 2014 043 780
- US-A1- 2014 092 608
- US-A1- 2016 161 096
- US-A1- 2016 230 973
- US-B1- 8 333 491
- US-B2- 8 519 566

## Description

The present disclosure relates to structures operable to emit light.

U.S. Pat. No. 8,376,777 discloses a QUICK MOUNTING DEVICE WITH MODULES. The quick mounting device for appliances is alleged to be quickly and easily engaged and disengaged mechanically without the use of tools.

A lighting arrangement is known from US2012/187852, and describes known LED drivers to be used in conditioning power to be supplied to LEDs and the driver can ramp up the voltage output when additional LEDs are connected, while holding current output constant. An assembly includes a relay that's connected between the inverter and the LED driver, that's connectable to the primary elevator electrical power supply, that's configured to allow AC power to flow from a primary elevator electrical power supply to elevator lighting system LEDs through the LED driver as long as AC power is available from a primary elevator electrical power supply, and that's further configured to, upon loss of power from a primary elevator power supply, switch contacts and provide to the LED driver AC power received from the inverter.
Other lighting arrangements are known from US2012/261992, GB2500797, US8333491, US2016/230973, US2014/092608, US6082871, JP2011190090 and US2013/342342.

In a broad aspect of the invention there is provided a lighting arrangement as claimed in claim 1.

The detailed description set forth below references the following drawings:
Figure 1 a perspective view of a lighting arrangement having a battery backup for operation;
Figure 2 is a perspective view of the lighting arrangement shown in Figure 1 with a light emitter portion partially unattached from a battery backup portion;
Figure 3 is a perspective view of the battery backup portion of the lighting arrangement shown in Figures 1 and 2;
Figure 4 is a magnified view of the structures shown in Figure 3;
Figure 5 is a circuit schematic of the circuit incorporated in the lighting arrangement shown in Figures 1 - 4;
Figure 6 is an exploded view of a second form of battery backup;
Figure 7 is a rear perspective view of the second battery backup shown in Figure 6 with covers removed to show internal structures;
Figure 8 is a front perspective view of the second battery backup shown in Figure 6;
Figure 9 is an exploded view of a third form of lighting arrangement;
Figure 10 is a perspective view from a top perspective looking downward of a battery backup of the third lighting arrangement;
Figure 11 is a perspective view from a bottom perspective looking upward of a battery backup of the third lighting arrangement;
Figure 12 is a side perspective view of the third lighting arrangement looking across a light emitter portion;
Figure 13 is an exploded view of a fourth form of lighting arrangement according to the present invention;
Figure 14 is a perspective view from a bottom perspective looking upward of the fourth exemplary lighting arrangement;
Figure 15 is a perspective view from a top perspective looking downward of the fourth exemplary lighting arrangement;
Figure 16 is a perspective view from a top perspective looking downward of a battery backup portion of the fourth exemplary lighting arrangement with a top wall removed to show internal structures;
Figure 17 is a magnified portion of Figure 14; and
Figure 18 is a magnified portion of Figure 17.

### DETAILED DESCRIPTION

The present disclosure, as demonstrated by the examples described below, can provide at least a pair of benefits over prior art devices, such as by way of example and not limitation a smaller driver and battery size along with the number of light emitting diodes (LEDs) being variable based on the battery voltage. In the prior art of LED lighting, the approach is a DC-DC converter since LEDs are typically DC devices and not that described herein.

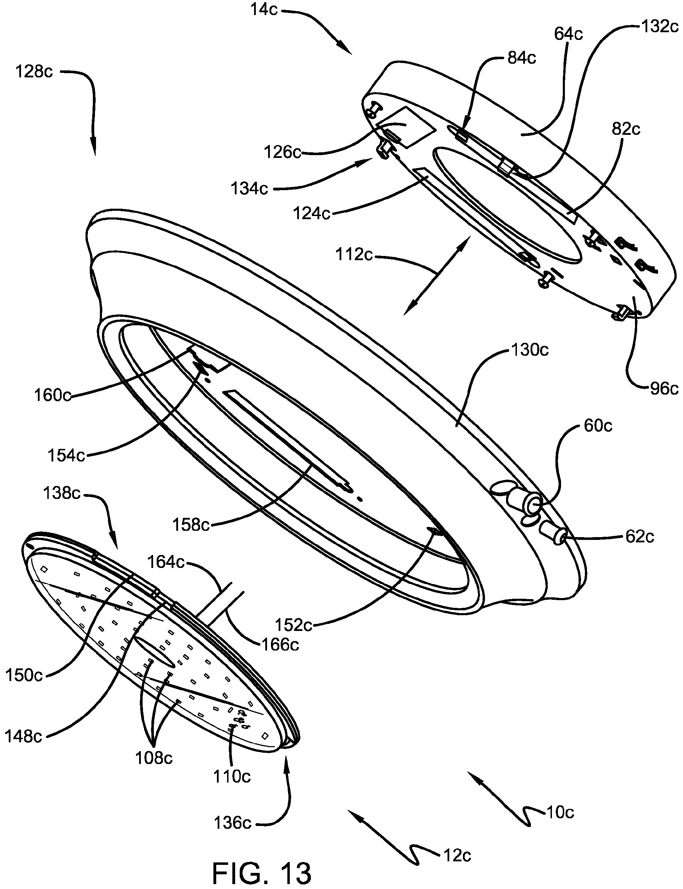

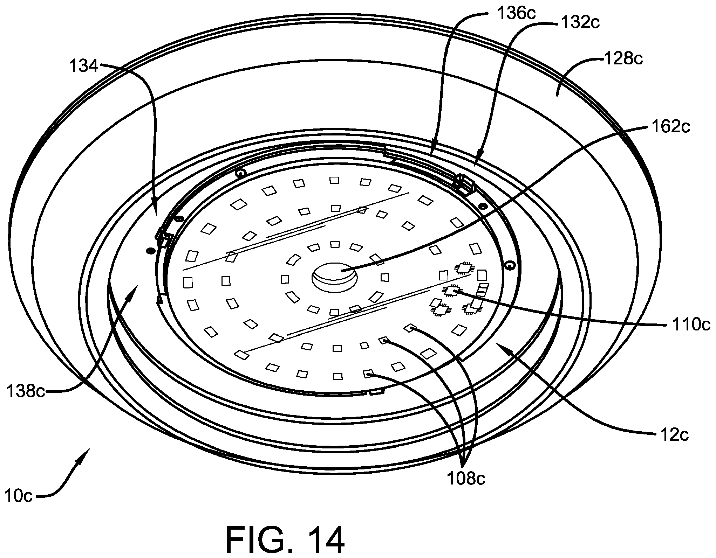

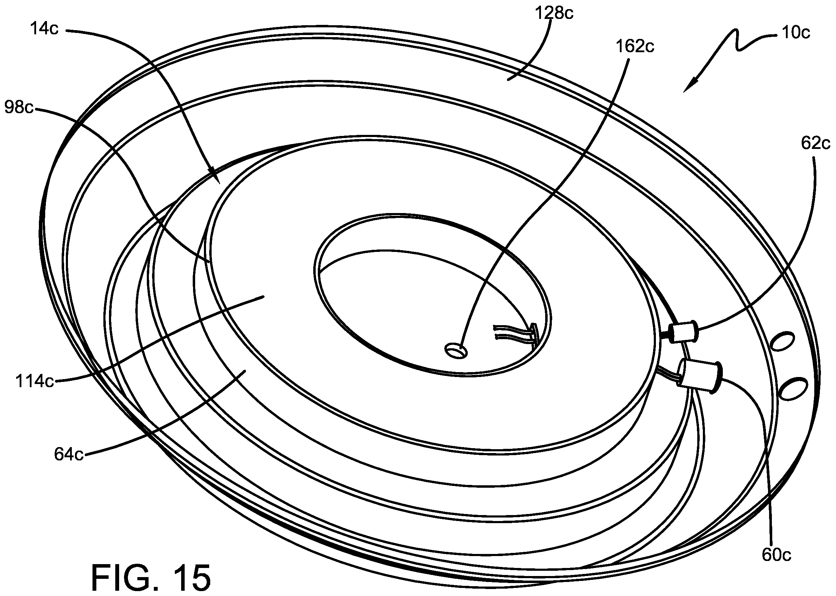

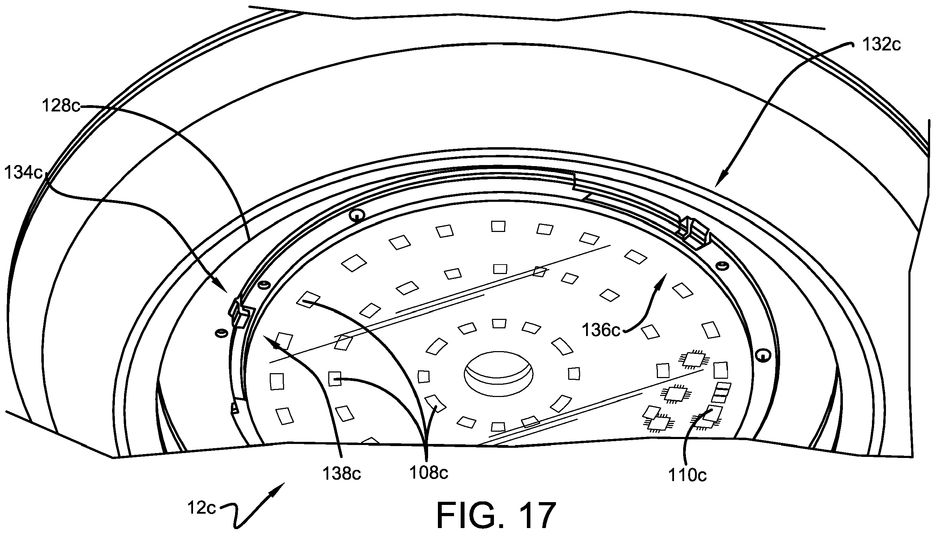

A plurality of different examples of the present disclosure is shown in the Figures of the application. It can be noted that the example of Figures 13 to 18 particularly embody the invention as claimed, however, all examples are retained in the disclosure for complete understanding of the evolution of the invention. Similar features are shown in the various examples of the present disclosure. Similar features across different examples have been numbered with a common reference numeral and have been differentiated by an alphabetic suffix. Also, to enhance consistency, the structures in any particular drawing share the same alphabetic suffix even if a particular feature is shown in less than all examples. Similar features are structured similarly, operate similarly, and/or have the same function unless otherwise indicated by the drawings or this specification. Furthermore, particular features of one example can replace corresponding features in another example or can supplement other examples unless otherwise indicated by the drawings or this specification.

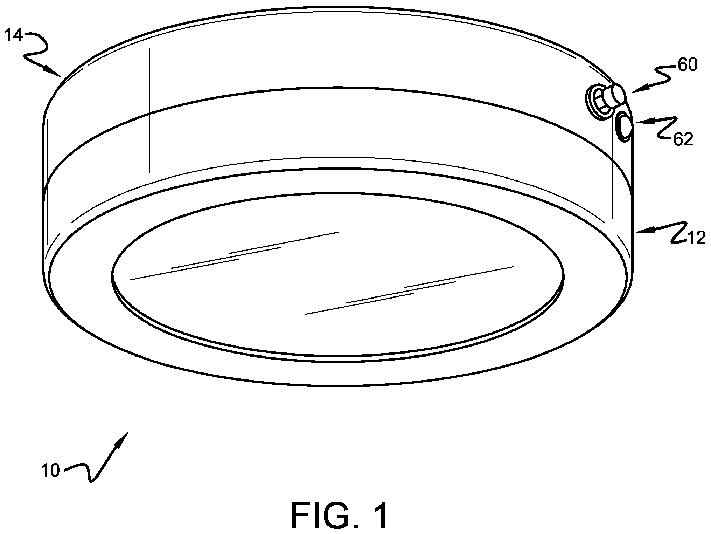

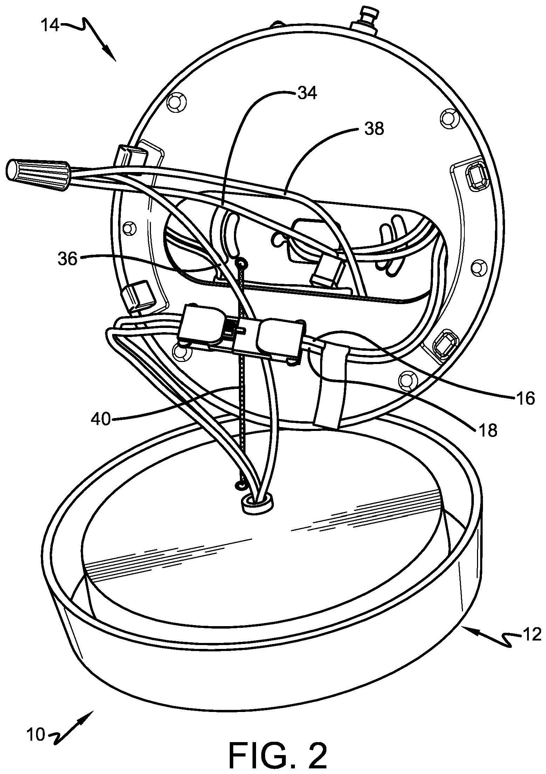

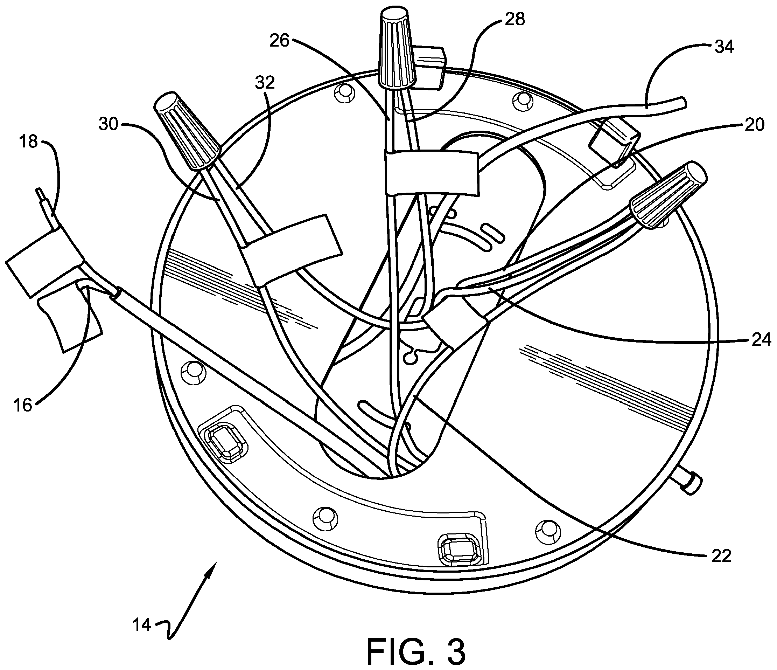

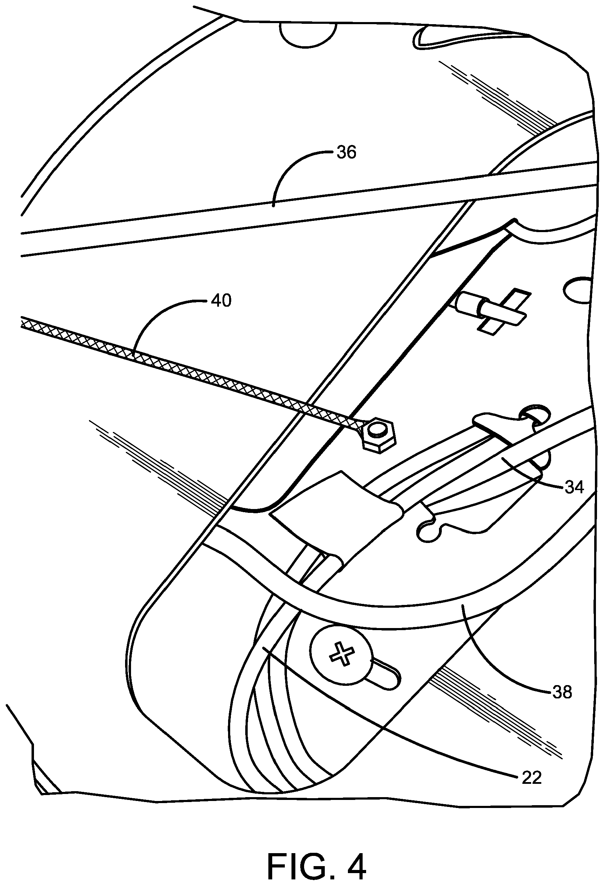

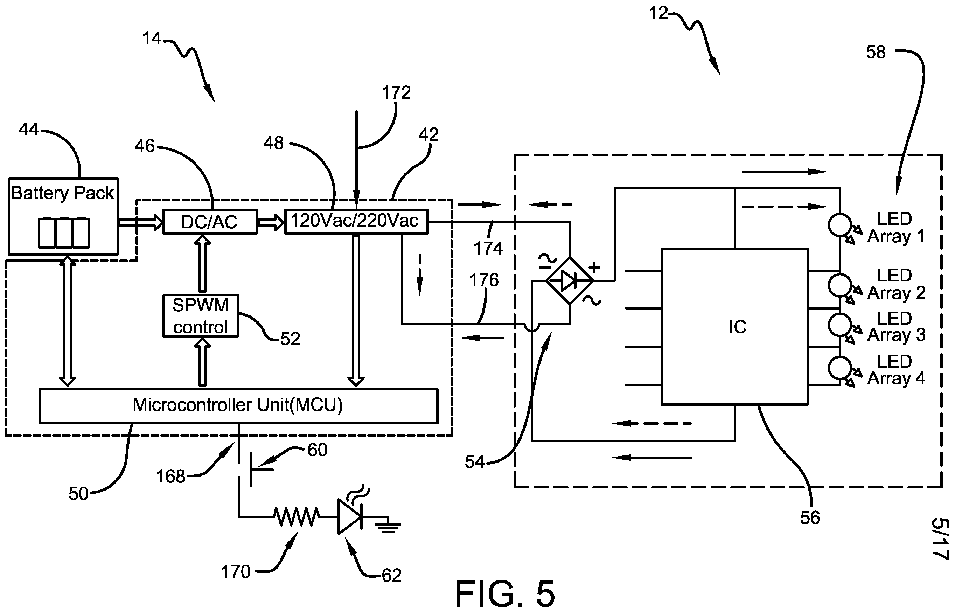

Figure 1 is a perspective view of an exemplary lighting arrangement 10. Figure 2 is a perspective view of the lighting arrangement 10 shown in Figure 1 with a light emitter portion 12 partially attached to a battery backup portion 14. Figure 3 is a perspective view of the battery backup portion 14 of the lighting arrangement shown in Figures 1 and 2. Figure 4 is a magnified view of the battery backup portion 14. The circuit schematic shown in Figure 5 is applied in the example.

In Figure 3, leads 16, 18 can extend to an LED array of the light emitter portion 12 from the battery backup portion 14. Leads 20, 22, and 24 can define a neutral connection. Leads 26, 28, can define a continuous, un-switched connection to the LED array of the light emitter portion 12 through the lead 18. AC from a standard or regular or non-emergency source can be supplied to the LED array of the light emitter portion 12 through leads 18, 26, 28. Leads 30, 32, can define a switched connection to the LED array of the light emitter portion 12 through the lead 18. AC from a battery of the battery backup portion 14 can be supplied to the LED array of the light emitter portion 12 through leads 18, 30, 32 when the standard or regular or non-emergency source has failed. Lead 34 can define a ground connection. A ground 36 from the LED array of the light emitter portion 12 and a ground 38 from the standard or regular or non-emergency source can be spliced to the ground lead 34.

The battery backup portion 14 can allow the light emitter portion 12 to function as it would function under the standard or regular or non-emergency source. The light emitter portion 12 can be fully functional, including dimmable. The battery backup portion 14 can be mounted directly to a junction box. When the leads have been connected, the leads can be arranged inside the battery backup portion 14. The battery backup portion 14 can be connected to the light emitter portion 12 through a safety wire 40. The safety wire 40 can ease installation and prevent completion separation of the light emitter portion 12 from the battery backup portion 14. The battery backup portion 14 can also include a test circuit with a push test button, referenced at 60 in Figure 1. The LED 62 and the test button 60 are mounted in the battery backup portion 14. When the button 60 is pressed, an LED 62 will be powered by the battery backup portion 14 if the battery backup portion 14 has power.

Figure 5 is a circuit schematic providing a driver circuit for the light emitter portion 12 shown in Figures 1 - 4. A prior art driver circuit is a relatively large structure, but the example herein can provide a chip mounted on the light emitter portion 12. The chip can tightly control voltage fluctuations. As a result, a battery for powering the light emitter portion 12 during an outage can be smaller in terms of physical size or power rating than would otherwise be required.

The battery backup portion 14 can include converter portion 42 and a battery portion 44. The converter portion 42 can be operably disposed between the battery portion 44 and the light emitter portion 12. The converter portion 42 can itself be powered by the battery portion 44. The battery portion 44 can have any desired physical size. The battery portion 44 can be defined by a single battery or an array of batteries connected in series or in parallel. By way of example and not limitation, the battery portion 44 can include one or more Samsung® Model ICR18650-26F batteries, each having a length of sixty-five millimeters and a diameter of eighteen and four-tenths millimeters. This yields a volume of seventeen-thousand two-hundred and eighty-four millimeters cubed. The battery portion 44 can be rated at 3.8 volts, 2600mAh and have a capacity is 9.88Wh after being charged or, e.g. approximately 30Wh when a plurality, say 3, batteries are used. In one example of the present disclosure, three batteries can be connected in series having a volume of fifty-one-thousand eight-hundred and fifty-one millimeters cubed.

The converter portion 42 can include a DC-AC converter 46. The DC-AC converter 46 can be a functional group that includes a plurality of components such as a transistor, diode, capacitor, and transformer. The DC-AC converter 46 can convert relatively low DC voltage from the battery portion 44 into AC voltage. The box 48 simply refers to the output of the converter portion 42.

The converter portion 42 can also include a microcontroller unit 50. The microcontroller unit 50 can include voltage dividers, amplifiers, RAM, a timer, A/D, PWM, and other integrated functions. In one or more example of the present disclosure, the microcontroller unit 50 can include an enhanced 8051 series MCU, such as a SH79F081A provided by Sino Wealth, alongside voltage dividers and amplifiers that enable the high voltages and currents to be measured by the A/D.

The converter portion 42 can also include a sinusoidal pulse-width modulation (SPWM) module 52. The SPWM module 52 can be integral with the microcontroller unit 50. The SPWM module 52 can generate a sinusoidal modulated pulse in response to a control signal emitted by the microcontroller unit 50 to SPWM module 52. The pulse can be utilized to control the ON/OFF status of a transistor of the converter 46, such as a MOSFET. When the transistor is open, the converter portion 42 can be engaged to communicate AC power to a rectifier 54. The microcontroller unit 50 can be arranged to monitor the delivery of AC power to the light emitter portion 12 from a primary source of power, such as the grid. When the primary or main electrical power is off due to an emergency, or power outage, or some other condition, the microcontroller unit 50 can emit the pulse to engage the other portions of the converter portion 42 and supply power to the light emitter portion 12.

The battery portion 44 and converter portion 42 can define an emergency back-up to the light emitter portion 12. The battery portion 44 and converter portion 42 can be formed as an integral battery backup portion 14 that can be attached to the junction box delivering electrical power to the light emitter portion 12. Wire nuts can connect the three (3) wires available for connection into junction box.

In one or more exemplary examples, the battery portion 44 can provide thirty watt-hours of power. When supporting a twenty watt light emitter portion 12 (or fixture), the battery portion 44 can thus provide power for one and a half hours. The power can be provided almost instantaneously; when power is lost from the standard or regular or non-emergency source, the micro-controller 50 can engage the inverter circuit 46 to supply 120V, AC power to the light emitter portion 12.

The output signal of the converter portion 42 is directed through the bridge rectifier 54. The signal can be received by an IC chip 56. The light emitter portion 12 can control individual LEDs of an LED array string 58 based on the input voltage. The quantity of LEDs can be variable. Unlike a traditional arrangement, the light emitter portion 12 can be configured to drive the IC chip 56 directly in relatively high voltage rectified AC mode and not to transform relatively high voltage rectified AC to low voltage DC. IC chip 56 is configured to provide device appropriate current flow into the LED array string 58. Many different step-IC chips can be utilized in various examples of the present disclosure, depending on different functions that may be desired, such as dimming or particular color dimming for differently colored LEDs. One example of a step-IC that can be utilized in one or more examples of the present disclosure for the IC chip 56 is a MAP9001 supplied by MagnaChip Semiconductor. The MAP9001 has the ability to accept voltages between 90V and 270V rectified voltage.

A connection to the grid is referenced at 172. AC from the rectifier 54 can pass to the rectifier 54 from the box 48 along line 174. AC from the rectifier 54 can return to the box 48 along line 176 (neutral). The power flow is illustrated with solid and dashed arrows. Because the AC is rectified there are two half cycles. In the positive half cycle (solid arrows), the power flows from line 174, through the rectifier 54, and out of the terminal marked (+), around to the LED string 58, through the chip 56, back through the rectifier 54, and then to neutral 176. During the negative half cycle (dashed arrows), the power flows from neutral 174, through the rectifier 54, out of the terminal marked (+), through the LED string 58, through the chip 56, back through the rectifier 54, and then through the line 174.

The arrangement described above results in the unexpected benefit of a smaller backup battery along with the number of light emitting diodes (LEDs) being variable based on the battery voltage.

Figure 5 illustrates one approach to connecting the button 60 and LED 62 to the circuit. The microcontroller 50 can be measuring/monitoring the voltage of the battery portion 44. The microcontroller 50 can include an output referenced at 168 that is connected to the LED 62 through the switch 60 and a resistor 170. The microcontroller 50 can be configured to turn on the output 168 when the battery portion 44 is charged; thus, when the user presses the button 60, the LED 62 would illuminate. If the battery portion 44 were not charged, the output 168 would be off and pressing the button 60 not cause the LED 62 to illuminate.

In the first exemplary example, the battery backup portion 14 and the light emitter portion 12 are fixed directly together. Also, the exemplary light emitter portion 12 and the exemplary battery backup portion 14 have substantially the same outer profile, as shown in Figure 1. The exemplary light emitter portion 12 and the exemplary battery backup portion 14 can thus both be exposed after installation without aesthetic concerns. The exemplary light emitter portion 12 and the exemplary battery backup portion 14 can be mounted on a ceiling or on a wall, both visible.

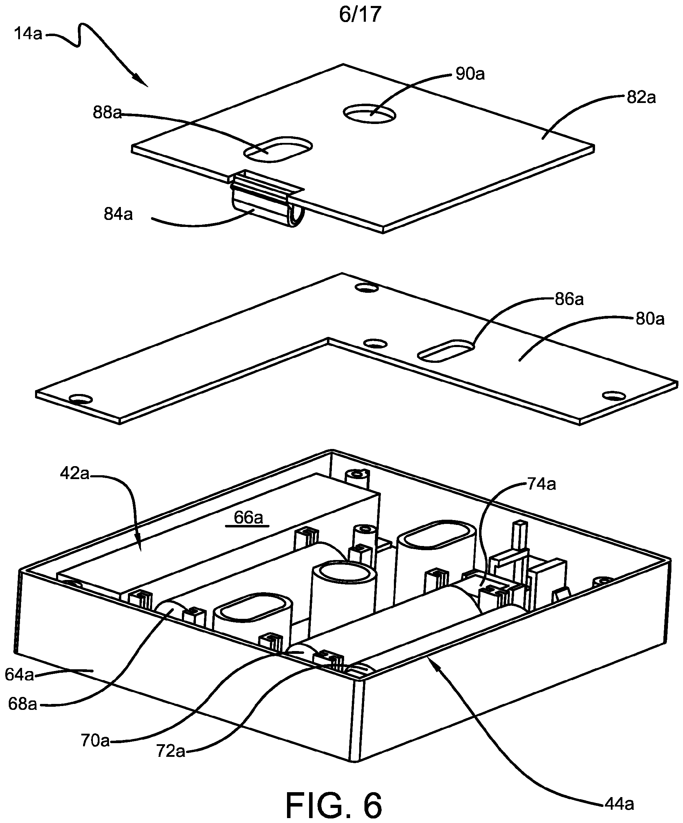

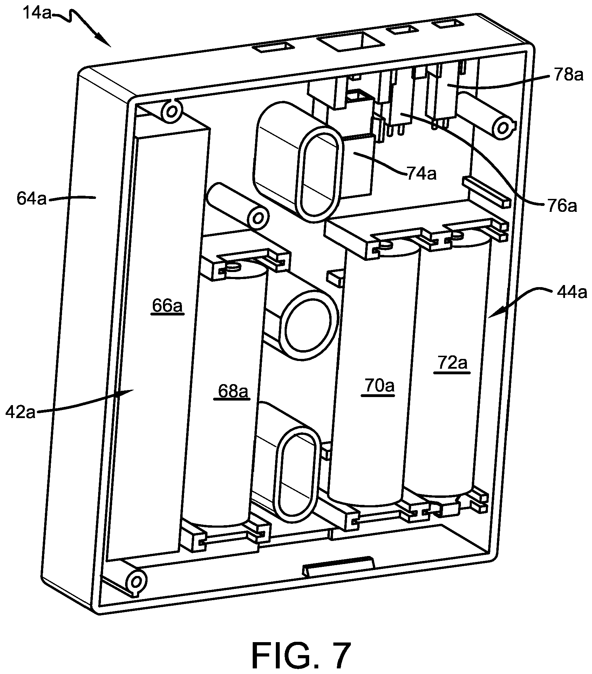

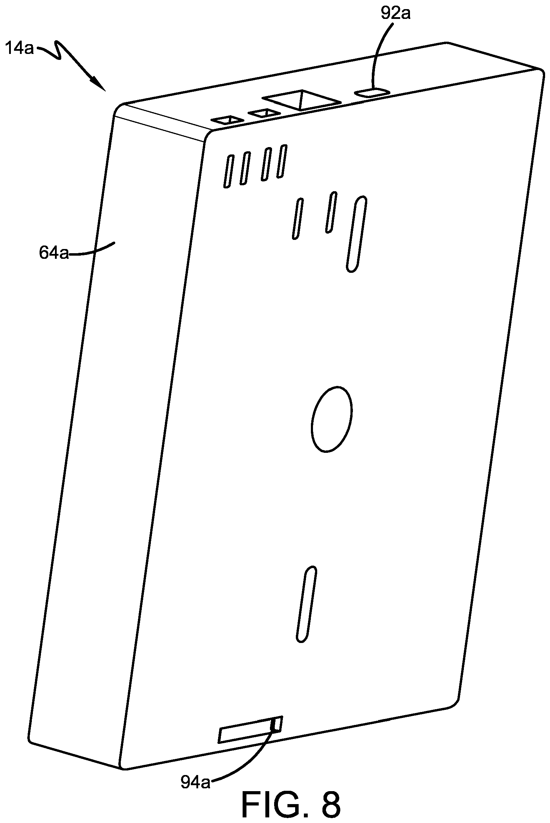

The first exemplary battery backup portion 14 is circular. Figures 6 - 8 are of a second exemplary battery backup portion 14a. The second exemplary battery backup portion 14a is square and can be exposed after installation without aesthetic concerns and mounted directly to a light emitter, similar to the first exemplary battery backup portion 14. The second exemplary battery backup portion 14a can be utilized with a wall sconce. The second exemplary battery backup portion 14a can include a case 64a. A converter portion 42a and a battery portion 44a can be positioned in the case 64a. The exemplary converter portion 42a is shown as a subcase 66a; the circuitry of the converter portion 42a is disposed within the subcase 66a. The schematic of Figure 5 is applicable to the lighting arrangement 10a.

The exemplary battery portion 44a includes batteries 68a, 70a, 72a. The second exemplary battery backup portion 14a can also include a plug 74a for interconnecting electronically with a light emitter portion (not shown), a plug 76a for interconnecting electronically with a test LED such as LED 62 (not shown), and a plug 78a for interconnecting electronically with a test button such as test button 60 (not shown). Apertures are defined in the exemplary case 64a for receiving mating plugs. It is noted that wiring among the various components is not shown to enhance the clarity of the other structures, but the batteries 68a, 70a, 72a, the converter portion 42a, and the plugs 74a, 76a, 78a are electronically connected with one another through wiring.

The second exemplary battery backup portion 14a can also include a cover 80a to enclose the converter portion 42a and the plugs 74a, 76a, 78a in the case 64a. The second exemplary battery backup portion 14a can also include a door 82a. The door 82a can be selectively opened and closed with a clip 84a. When the door 82a is closed, the batteries 68a, 70a, 72a are enclosed in the case 64a. The cover 80a and door 82a can include one or more apertures such as apertures 86a, 88a, 90a for receiving mounting hardware projecting from a wall. The case 64a can include apertures such as apertures 92a, 94a for receiving tabs associated with a light emitter to hang the light emitter on the case 64a.

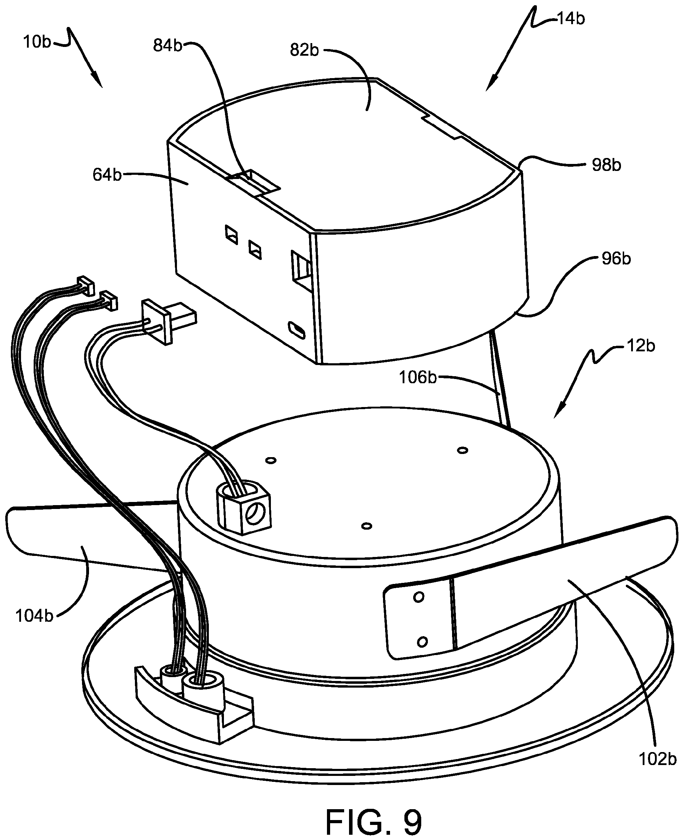

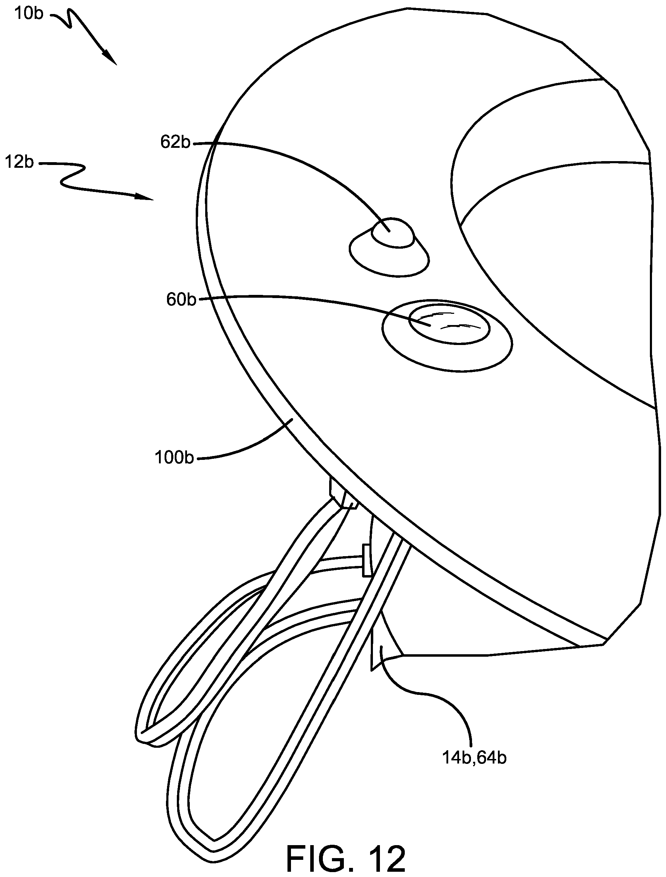

Figures 9 - 12 are of an example of the present disclosure that is a recessed lighting arrangement 10b. The lighting arrangement 10b includes a light emitter portion 12b having a plurality of light emitting diodes and circuitry for driving the plurality of light emitting diodes including a rectifier and an IC chip downstream of the rectifier. The lighting arrangement 10b also includes a battery backup portion 14b in electronic communication with the light emitter portion 12b and having a battery portion with one or more batteries and a converter portion with a DC-AC inverter downstream of the one or more batteries that directs the electrical signal to the rectifier and is driven by the one or batteries. The schematic of Figure 5 is applicable to the lighting arrangement 10b.

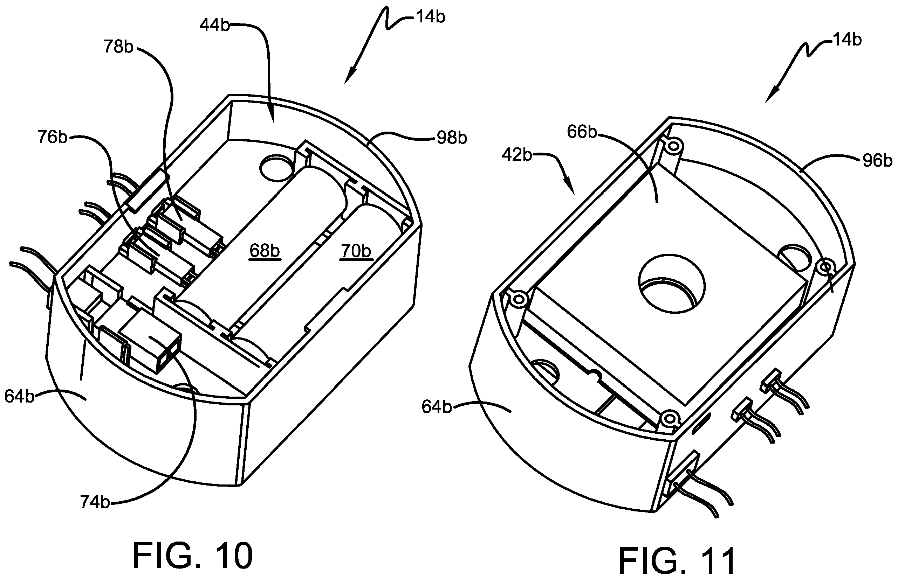

The third exemplary battery backup portion 14b is generally cubic and can be mounted directly to the light emitter 12b, similar to the first and second exemplary battery backup portions 14, 14a. The third exemplary battery backup portion 14b can include a case 64b. The exemplary case 64b extends from a bottom edge 96b to a top edge 98b. A converter portion 42b and a battery portion 44b can be positioned in the case 64b. The exemplary converter portion 42b is shown as a subcase 66b, as best shown in Figure 11. The circuitry of the converter portion 42b is disposed within the subcase 66b. The schematic of Figure 5 is applicable to the lighting arrangement 10b.

The exemplary battery portion 44b includes batteries 68b, 70b. The third exemplary battery backup portion 14b can also include a plug 74b for interconnecting electronically with the light emitter portion 12b, a plug 76b for interconnecting electronically with a test LED 62b, and a plug 78b for interconnecting electronically with a test button 60b. The light emitting diode 62b and the test button 60b are mounted in a flange portion 100b of the light emitter portion 12b. Apertures are defined in the exemplary case 64b for receiving mating plugs. It is noted that wiring among the various components is not shown to enhance the clarity of the other structures, but the batteries 68b, 70b, the converter portion 42b, and the plugs 74b, 76b, 78b are electronically connected with one another through wiring.

The third exemplary battery backup portion 14b can also include a door 82b to enclose the converter portion 42b, the plugs 74b, 76b, 78b, and the battery portion 44b in the case 64b. The door 82b can be selectively opened and closed with a clip 84b. When the door 82b is closed, the batteries 68b, 70b are enclosed in the case 64b. The lighting arrangement 10b can also include fins/springs 102b, 104b, 106b for mounting the lighting arrangement 10b in a hole in a ceiling.

Figures 13 - 16 are of an example of the present invention that is a lighting arrangement 10c that can be mounted on a surface exposed in a dwelling space, such as a ceiling or a wall. The lighting arrangement 10c includes a light emitter portion 12c having a plurality of light emitting diodes 108c and circuitry (referenced generally at 110c) for driving the plurality of light emitting diodes 108c including a rectifier and an IC chip downstream of the rectifier. The lighting arrangement 10c also includes a battery backup portion 14c in electronic communication with the light emitter portion 12c and having a battery portion with one or more batteries and a converter portion with a DC-AC inverter downstream of the one or more batteries that directs the electrical signal to the rectifier and is driven by the one or batteries. The schematic of Figure 5 is applicable to the lighting arrangement 10c.

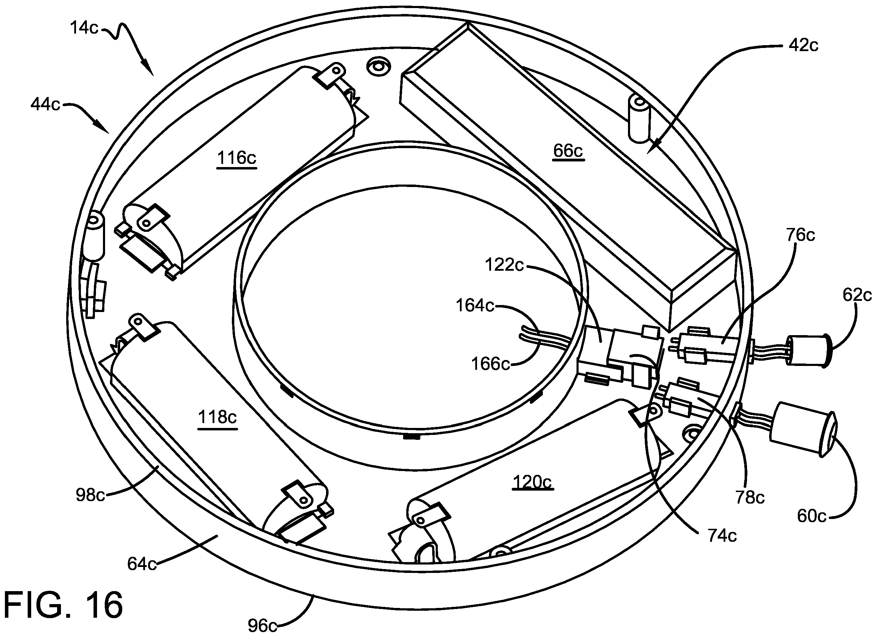

The light emitter portion 12c and the battery backup portion 14c are centered on a longitudinal axis 112c. The third exemplary battery backup portion 14c is generally ring or donut-shaped. The third exemplary battery backup portion 14c can include a case 64c. The exemplary case 64c extends from a bottom edge 96c to a top edge 98c and can include a top wall 114c. A converter portion 42c and a battery portion 44c can be positioned in the case 64c. The exemplary converter portion 42c is shown as a subcase 66c, as best shown in Figure 16. The circuitry of the converter portion 42c is disposed within the subcase 66c. The schematic of Figure 5 is applicable to the lighting arrangement 10c.

The exemplary battery portion 44c includes batteries. In Figure 16, the case 64c is shown having pockets 116c, 118c, 120c for receiving batteries. The perspective of Figure 16 is from the top of the battery backup portion 14c, looking down. The openings of the pockets 116c, 118c, 120c for receiving the batteries is on the underside of the case 64c and therefore not visible in Figure 16. The third exemplary battery backup portion 14c can also include a plug 74c for interconnecting electronically with the light emitter portion 12c. A plug from the light emitter 12c is referenced at 122c. The third exemplary battery backup portion 14c can also include a plug 76c for interconnecting electronically with a test LED 62c. The third exemplary battery backup portion 14c can also include a plug 78c for interconnecting electronically with a test button 60c. Apertures are defined in the exemplary case 64c for permitting passage of the plugs 76c, 78c. It is noted that wiring among the various components is not shown to enhance the clarity of the other structures, but the batteries, the converter portion 42c, and the plugs 74c, 76c, 78c are electronically connected with one another through wiring.

The fourth exemplary battery backup portion 14c can also include doors 82c, 124c, 126c to enclose the pockets 116c, 118c, 120c that receive the batteries. Each door 82c, 124c, 126c can be selectively opened and closed with a respective clip, such as clip 84c of door 82c. When the doors 82c, 124c, 126c are closed, the batteries are enclosed in the case 64c.

The lighting arrangement 10c further comprises a pan or shade 128c at least partially positioned between the light emitter portion 12c and the battery backup portion 14c along the longitudinal axis 112c. The electronic communication between the light emitter portion 12c and the battery backup portion 14c occurs through wires extending through an aperture 162c in the shade 128c, such as wires referenced at 164c, 166c. The shade 128c extends radially beyond the light emitter portion 12c relative to the longitudinal axis 112c and is configured to shield the battery backup portion 14c from light emitted by the light emitter portion 12c. The shade 128c can be mounted to a junction box or to the ceiling or wall, directly or with a bracket. The battery backup portion 14c can be mounted to the light emitter 12c through the shade 128c, as will be described in greater detail below. The light emitting diode 62c and the test button 60c can be mounted in a flange portion 130c of the shade 128c. The shade 128c includes apertures, such as apertures 158c, 160c, aligned with the doors 124c, 126c such that the doors 124c, 126c are exposed through the apertures 158c, 160c, allowing the batteries to be replaced without removing the shade 128c from the ceiling or wall. It is noted that the shade 128c can include an aperture aligned with door 82c as well.

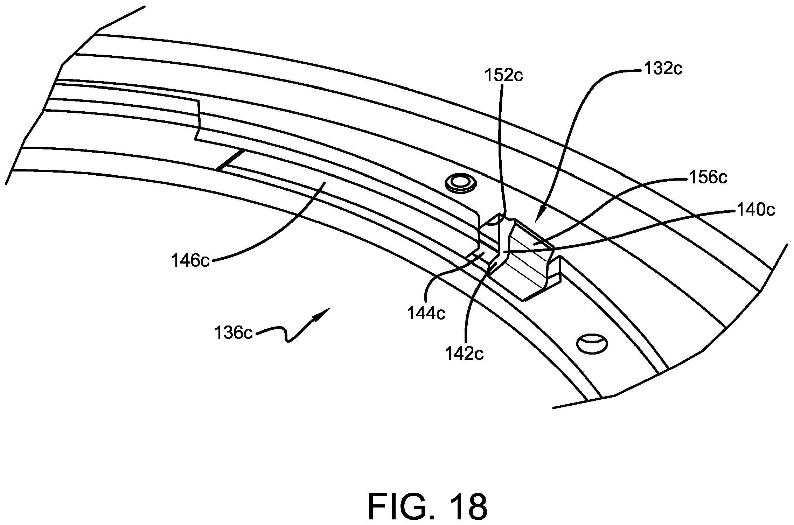

The lighting arrangement 10 also includes a plurality of locking arms such as locking arms 132c, 134c and a plurality of circumferential notches such as circumferential notches 136c, 138c. The plurality of locking arms 132c, 134c can each be fixedly associated with the battery backup portion 14c. Each of the plurality of locking arms 132c, 134c can include an axial portion extending along the longitudinal axis 112c and a radial portion extending perpendicular to the longitudinal axis 112c. In Figure 18, the exemplary locking arm 132c includes an axial portion 140c and a radial portion 142c. Each of the radial portions extends from a first end at an intersection with one of the axial portions to a respective second end distal relative to the first end.

Each of the plurality of exemplary circumferential notches 136c, 138c is defined in the light emitter portion 12c. Each of the plurality of circumferential notches 136c, 138c extends about the longitudinal axis 112c and defines a gap portion and a ledge portion. In Figure 18, the exemplary circumferential notch 136c includes a gap portion 144c and a radial portion 146c. In Figure 13, the exemplary circumferential notch 138c includes a gap portion 148c and a radial portion 150c.

The battery backup portion 14c and the shade 128c can be interconnected by passing the locking arms 132c, 134c through apertures in the shade 128c, such as apertures 152c, 154c. The apertures 152c, 154c can be sized to prevent movement of the plurality of locking arms 132c, 134c about the longitudinal axis 112c. 11. The plurality of locking arms 132c, 134c can engage at least some of the apertures 152c, 154c of the shade 128c through a snap-lock connection wherein the plurality of locking arms 132c, 134c elastically deform during passage through the apertures 152c, 154c of the shade 128c and recover after passage through the apertures 152c, 154c of the shade 128c. As best shown in Figure 18, the locking arm 132c can include a radially-outer facing ramp 156c than rides along the aperture 152c and elastically deforms, and then snaps back to lock against the aperture 152c.

After the battery backup portion 14c has been engaged with the shade 128c, the light emitter portion 12c and the battery backup portion 14c can be interconnected by moving each of the plurality of radial portions through one of the plurality of gap portions along the longitudinal axis 112c and then rotating the light emitter portion 12c and the battery backup portion 14c relative to one another in a first angular direction about the longitudinal axis 112c and sliding each of the plurality of radial portions under the ledge portions. The ledge portions can rest on the radial portions.

## Claims

1. A lighting arrangement (10c) comprising:
a light emitter portion (12c) having a plurality of light emitting diodes, LEDs (108c), and circuitry for driving said plurality of LEDs, said circuitry including a rectifier (54) and an IC chip (56) configured to drive said plurality of LEDs with the rectified voltage provided by said rectifier; and
a battery backup portion (14c) having:
a battery portion (44) with one or more batteries;
a converter portion (42) with a DC-AC inverter (46) operably disposed between the battery portion (44) and the light emitter portion (12) and connected to said rectifier (54) and configured to receive electrical power from the one or more batteries; and
a microcontroller unit (50) configured to route AC power to the rectifier (54) from either a primary AC source or from the battery portion (44) by the DC-AC inverter (46), the lighting arrangement **characterized in that**:
the light emitter portion (12) is configured to control individual LEDs of the plurality of LEDs such that, when AC power is routed from the battery portion, the quantity of illuminated LEDs is variable based on the battery voltage;
wherein said light emitter portion (12c) and said battery backup portion (14c) are centered on a longitudinal axis (112c) and wherein said lighting arrangement further comprises:
a shade (128c) at least partially positioned between said light emitter portion and said battery backup portion along said longitudinal axis, said shade extending radially beyond said light emitter portion relative to said longitudinal axis and configured to shield said battery backup portion from light emitted by said light emitter portion;
a plurality of locking arms (132c, 134c) each fixedly associated with one of said light emitter portion and said battery backup portion, each of said plurality of locking arms including an axial portion (140c) extending along said longitudinal axis and a radial portion (142c) extending perpendicular to said longitudinal axis, each of said radial portions extending from a first end at an intersection with one of said axial portions to a respective second end distal relative to said first end;
a plurality of circumferential notches (136c, 138c) each defined in the other of said light emitter portion and said battery backup portion, each of said plurality of circumferential notches extending about said longitudinal axis and defining a gap portion and a ledge portion; and
wherein said light emitter portion and said battery backup portion are interconnected by moving each of said plurality of radial portions through one of said plurality of gap portions along said longitudinal axis and then rotating said light emitter portion and said battery backup portion relative to one another in a first angular direction about said longitudinal axis and sliding each of said plurality of radial portions under said ledge portions.

2. The lighting arrangement of claim 1 wherein each of said one or more batteries is further defined as having a maximum volume of seventeen-thousand two-hundred and eighty-four millimeters cubed or said one or more batteries is three batteries having a combined maximum volume of fifty-one-thousand eight-hundred and fifty-one millimeters cubed.

3. The lighting arrangement of claim 1 wherein the microcontroller unit (50) is configured to monitor power levels directed to said light emitter portion (12c).

4. The lighting arrangement of claim 3 wherein said converter portion further comprises a sinusoidal pulse-width modulation module (52), said sinusoidal pulse-width modulation module configured to generate a sinusoidal modulated pulse in response to a control signal emitted by said microcontroller unit to said sinusoidal pulse-width modulation module.

5. The lighting arrangement of claim 1 wherein each of said plurality of locking arms are configured to extend through apertures (152c, 154c) in said shade.

6. The lighting arrangement of claim 5 wherein at least some of said plurality of locking arms (132c, 134c) are configured to engage at least some of said apertures (152c, 154c) of said shade (128c) through a snap-lock connection wherein said at least some of said plurality of locking arms are configured to elastically deform during passage through said at least some of said apertures of said shade and recover after passage through said at least some of said apertures of said shade.

7. The lighting arrangement of claim 5 wherein said apertures (152c, 154c) are configured to prevent movement of said plurality of locking arms (132c, 134c) about said longitudinal axis (112c).

8. The lighting arrangement of claim 1 wherein:
said battery backup portion (14c) further comprises at least one door (82c) openable in the direction of the light emitter portion (12c) for enclosing one of said one or more batteries; and
said shade (128c) further comprises at least one aperture (160c) wherein said at least one openable door is exposed through said at least one aperture.

9. The lighting arrangement of claim 1 further comprising:
a light emitting diode (62c); and
a test button (60c) in electronic communication with said battery backup portion (14c) and configured such that pressing of the test button (60c) places said light emitting diode in electronic communication with said one or more batteries of said battery backup portion (14c), wherein said light emitting diode and said test button are mounted in said shade.

10. The lighting arrangement of claim 1 further comprising:
a light emitting diode (62c); and
a test button (60c) in electronic communication with said battery backup portion (14c) and configured such that pressing of the test button places said light emitting diode in electronic communication with said one or more batteries of said battery backup portion (14c), wherein said light emitting diode and said test button are mounted in said battery backup portion (14c).

11. The lighting arrangement of claim 1 further comprising:
a light emitting diode (62c); and
a test button (60c) in electronic communication with said battery backup portion (14c) and configured such that pressing of the test button places said light emitting diode in electronic communication with said one or more batteries of said battery backup portion (14c), wherein said light emitting diode and said test button are mounted in said light emitter portion (12c).

12. The lighting arrangement of claim 1 wherein:
the light emitter portion (12c) is dimmable.

## Patentansprüche

1. Beleuchtungsanordnung (10c), die Folgendes aufweist:
einen Lichtemitterteil (12c) mit mehreren Leuchtdioden, LED, (108c) und einer Schaltungsanordnung zum Ansteuern der genannten mehreren LED, wobei die genannte Schaltungsanordnung einen Gleichrichter (54) und einen IC-Chip (56), der zum Ansteuern der genannten mehreren LED mit der von dem genannten Gleichrichter bereitgestellten gleichgerichteten Spannung enthält; und
einen Batterie-Ersatzstromversorgungsteil (14c) mit:
einem Batterieteil (44) mit ein oder mehr Batterien;
einen Stromrichterteil (42) mit einem Wechselrichter (46), der funktionell zwischen dem Batterieteil (44) und dem Lichtemitterteil (12) angeordnet ist und mit dem genannten Gleichrichter (54) verbunden ist und zur Aufnahme von elektrischer Leistung aus den ein oder mehr Batterien konfiguriert ist; und
eine Mikrocontroller-Einheit (50), die zum Leiten von Wechselstrom durch den Wechselrichter (46) von entweder einer primären Wechselstromquelle oder von dem Batterieteil (44) zum Gleichrichter (54) konfiguriert ist, wobei die Beleuchtungsanordnung **dadurch gekennzeichnet ist, dass**:
der Lichtemitterteil (12) zum Steuern einzelner LED der mehreren LED konfiguriert ist, so dass, wenn Wechselstrom vom Batterieteil geleitet wird, die Anzahl der beleuchteten LED auf Basis der Batteriespannung änderbar ist;
wobei der genannte Lichtemitterteil (12c) und der genannte Batterie-Ersatzstromversorgungsteil (14c) auf einer Längsachse (112c) zentriert sind und wobei die genannte Beleuchtungsanordnung ferner Folgendes aufweist:
einen Schirm (128c), der zumindest teilweise zwischen dem genannten Lichtemitterteil und dem genannten Batterie-Ersatzstromversorgungsteil entlang der genannten Längsachse positioniert ist, wobei sich der genannte Schirm radial über den genannten Lichtemitterteil hinaus relativ zur genannten Längsachse erstreckt und zum Abschirmen des genannten Batterie-Ersatzstromversorgungsteils vor durch den genannten Lichtemitterteil emittiertem Licht gestaltet ist;
mehrere Sicherungsarme (132c, 134c), die jeweils einem von dem genannten Lichtemitterteil und dem genannten Batterie-Ersatzstromversorgungsteil fest zugeordnet sind, wobei jede der genannten mehreren Sicherungsarme einen axialen Teil (140c), der sich an der genannten Längsachse entlang erstreckt, und einen radialen Teil (142c), der sich lotrecht zur genannten Längsachse erstreckt, enthält, wobei jeder der genannten radialen Teile sich von einem ersten Ende an einem Schnittpunkt mit einem der genannten axialen Teile zu einem jeweiligen zweiten, relativ zu dem genannten ersten Ende distalen Ende, erstreckt;
mehrere Umfangsaussparungen (136c, 138c), die jeweils in dem anderen von dem genannten Lichtemitterteil und dem genannten Batterie-Ersatzstromversorgungsteil definiert sind, wobei jede der genannten mehreren Umfangsaussparungen sich um die genannte Längsachse erstreckt und einen Spaltteil und einen Vorsprungteil definiert; und
wobei der genannte Lichtemitterteil und der genannte Batterie-Ersatzstromversorgungsteil durch Bewegen von jedem der genannten mehreren radialen Teile durch einen von den genannten mehreren Spalteilen an der genannten Längsachse entlang und dann Drehen des genannten Lichtemitterteils und des genannten Batterie-Ersatzstromversorgungsteils relativ zueinander in einer ersten Winkelrichtung um die genannte Längsachse und Verschieben von jedem der genannten mehreren radialen Teile unter die genannten Vorsprungteile miteinander verbunden werden.

2. Beleuchtungsanordnung nach Anspruch 1, wobei jede der genannten ein oder mehr Batterien ferner so gestaltet ist, dass sie ein maximales Volumen von siebzehntausendzweihundertvierundachtzig Kubikmillimeter hat, oder die genannten ein oder mehr Batterien drei Batterien mit einem kombinierten maximalen Volumen von einundfünfzigtausendachthunderteinundfünfzig Kubikmillimeter sind.

3. Beleuchtungsanordnung nach Anspruch 1, wobei die Mikrocontroller-Einheit (50) zum Überwachen von zu dem genannten Lichtemitterteil (12c) geleiteten Leistungspegeln konfiguriert ist.

4. Beleuchtungsanordnung nach Anspruch 3, wobei der genannte Stromrichterteil ferner ein Modul zur sinusförmigen Pulsbreitenmodulation (52) aufweist, wobei das genannte Modul zur sinusförmigen Pulsbreitenmodulation zum Erzeugen eines sinusförmigen modulierten Pulses als Reaktion auf ein von der genannten Mikrocontroller-Einheit zum genannten Modul für sinusförmige Pulsbreitenmodulation emittiertes Steuersignal konfiguriert ist.

5. Beleuchtungsanordnung nach Anspruch 1, wobei jeder der genannten mehreren Sicherungsarme so gestaltet ist, dass sie sich durch Öffnungen (152c, 154c) in dem genannten Schirm erstrecken.

6. Beleuchtungsanordnung nach Anspruch 5, wobei wenigstens einige der genannten mehreren Sicherungsarme (132c, 134c) gestaltet sind, um mit wenigstens einigen der genannten Öffnungen (152c, 154c) des genannten Schirms (128c) durch eine Schnappverbindung in Eingriff zu kommen, wobei die genannten wenigstens einigen der genannten mehreren Sicherungsarme gestaltet sind, um sich während des Hindurchführens durch die genannten wenigstens einigen der genannten Öffnungen des genannten Schirms elastisch zu verformen und nach dem Hindurchführen durch die genannten wenigstens einigen der genannten Öffnungen des genannten Schirms zurückzustellen.

7. Beleuchtungsanordnung nach Anspruch 5, wobei die genannten Öffnungen (152c, 154c) gestaltet sind, um die Bewegung der genannten mehreren Sicherungsarme (132c, 134c) um die genannte Längsachse (112c) zu verhüten.

8. Beleuchtungsanordnung nach Anspruch 1, wobei:
der genannte Batterie-Ersatzstromversorgungsteil (14c) ferner wenigstens eine in der Richtung des Lichtemitterteils (12c) öffnungsfähige Tür (82c) zum Einschließen von einer der genannten ein oder mehr Batterien aufweist; und
der genannte Schirm (128c) ferner wenigstens eine Öffnung (160c) aufweist, wobei die genannte wenigstens eine öffnungsfähige Tür durch die genannte wenigstens eine Öffnung freiliegt.

9. Beleuchtungsanordnung nach Anspruch 1, die ferner Folgendes aufweist:
eine Leuchtdiode (62c) und
einen Testknopf (60c), der mit dem genannten Batterie-Ersatzstromversorgungsteil (14c) in elektronischer Verbindung ist und so konfiguriert ist, dass das Drücken des Testknopfs (60c) die genannte Leuchtdiode in elektronische Verbindung mit den genannten ein oder mehr Batterien des genannten Batterie-Ersatzstromversorgungsteils (14c) versetzt, wobei die genannte Leuchtdiode und der genannte Testknopf in dem genannten Schirm montiert sind.

10. Beleuchtungsanordnung nach Anspruch 1, die ferner Folgendes aufweist:
eine Leuchtdiode (62c) und
einen Testknopf (60c), der mit dem genannten Batterie-Ersatzstromversorgungsteil (14c) in elektronischer Verbindung ist und so konfiguriert ist, dass das Drücken des Testknopfs die genannte Leuchtdiode in elektronische Verbindung mit den genannten ein oder mehr Batterien des genannten Batterie-Ersatzstromversorgungsteils (14c) versetzt, wobei die genannte Leuchtdiode und der genannte Testknopf in dem genannten Batterie-Ersatzstromversorgungsteil (14c) montiert sind.

11. Beleuchtungsanordnung nach Anspruch 1, die ferner Folgendes aufweist:
eine Leuchtdiode (62c) und
einen Testknopf (60c), der mit dem genannten Batterie-Ersatzstromversorgungsteil (14c) in elektronischer Verbindung ist und so konfiguriert ist, dass das Drücken des Testknopfs die genannte Leuchtdiode in elektronische Verbindung mit den genannten ein oder mehr Batterien des genannten Batterie-Ersatzstromversorgungsteils (14c) versetzt, wobei die genannte Leuchtdiode und der genannte Testknopf in dem genannten Lichtemitterteil (12c) montiert sind.

12. Beleuchtungsanordnung nach Anspruch 1, wobei:
der Lichtemitterteil (12c) dimmbar ist.

## Revendications

1. Arrangement d'éclairage (10c) comprenant :
une partie émettrice de lumière (12c) comportant une pluralité de diodes électroluminescentes, DEL (108c), et des circuits d'excitation de ladite pluralité de DEL, lesdits circuits comportant un redresseur (54) et une puce à circuit intégré (56) configurée pour exciter ladite pluralité de DEL avec la tension redressée fournie par ledit redresseur ; et
une partie de batterie de secours (14c) comportant :
une partie de batterie (44) comptant une ou plusieurs batteries ;
une partie de convertisseur (42) comptant un inverseur C.C.-C.A. (46) disposé fonctionnellement entre la partie de batterie (44) et la partie émettrice de lumière (12) et connectée audit redresseur (54) et configurée pour recevoir un courant électrique depuis les une ou plusieurs batteries ; et
une unité de microcontrôleur (50) configurée pour router la puissance C.A. jusqu'au redresseur (54) depuis soit une source C.A. primaire, soit la partie de batterie (44) par l'inverseur C.C.-C.A. (46), l'arrangement d'éclairage étant **caractérisé en ce que** : la partie émettrice de lumière (12) est configurée pour commander des DEL individuelles de la pluralité de DEL de telle sorte que, quand une puissance C.A. est routée depuis la partie de batterie, la quantité de DEL éclairées est variable en fonction de la tension de batterie ;
dans lequel ladite partie émettrice de lumière (12c) et ladite partie de batterie de secours (14c) sont centrées sur un axe longitudinal (112c) et ledit arrangement d'éclairage comprenant en outre :
un cache (128c) positionné au moins partiellement entre ladite partie émettrice de lumière et ladite partie de batterie de secours le long dudit axe longitudinal, ledit cache s'étendant radialement au-delà de ladite partie émettrice de lumière par rapport audit axe longitudinal et étant configuré pour protéger ladite partie de batterie de secours de la lumière émise par la partie émettrice de lumière ;
une pluralité de bras de verrouillage (132c, 134c) associés chacun de manière fixe à une de ladite partie émettrice de lumière et de ladite partie de batterie de secours, chacun de ladite pluralité de bras de verrouillage comportant une partie axiale (140c) s'étendant le long dudit axe longitudinal et une partie radiale (142c) s'étendant perpendiculairement audit axe longitudinal, chacune desdites parties radiales s'étendant depuis une première extrémité au niveau d'une intersection avec une desdites parties axiales jusqu'à une seconde extrémité respective distale par rapport à ladite première extrémité ;
une pluralité d'encoches circonférentielles (136c, 138c) définies chacune dans l'autre de ladite partie émettrice de lumière et de ladite partie de batterie de secours, chacune de ladite pluralité d'encoches circonférentielles s'étendant autour dudit axe longitudinal et définissant une partie d'espace et une partie de rebord ; et
dans lequel ladite partie émettrice de lumière et ladite partie de batterie de secours sont interconnectées en déplaçant chacune de ladite pluralité de parties radiales à travers une de ladite pluralité de parties d'espace le long dudit axe longitudinal puis en tournant ladite partie émettrice de lumière et ladite partie de batterie de secours l'une par rapport à l'autre dans un premier sens angulaire autour dudit axe longitudinal et en coulissant chacune de ladite pluralité de parties radiales en-dessous desdites parties de rebord.

2. Arrangement d'éclairage selon la revendication 1, dans lequel chacune desdites une ou plusieurs batteries est définie en outre comme ayant un volume maximum de dix-sept mille deux cent quatre-vingt-quatre millimètres cubes ou lesdites une ou plusieurs batteries sont trois batteries ayant un volume maximum combiné de cinquante et un mille huit cent cinquante et un millimètres cubes.

3. Arrangement d'éclairage selon la revendication 1, dans lequel l'unité de microcontrôleur (50) est configurée pour contrôler des niveaux de puissance dirigés vers ladite partie émettrice de lumière (12c).

4. Arrangement d'éclairage selon la revendication 3, dans lequel ladite partie de convertisseur comprend en outre un module de modulation de largeur d'impulsion sinusoïdale (52), ledit module de modulation de largeur d'impulsion sinusoïdale étant configuré pour générer une impulsion modulée sinusoïdale en réponse à un signal de commande émis par ladite unité de microcontrôleurs vers ledit module de modulation de largeur d'impulsion sinusoïdale.

5. Arrangement d'éclairage selon la revendication 1, dans lequel chacun de ladite pluralité de bras de verrouillage est configuré pour s'étendre à travers des ouvertures (152c, 154c) dans ledit cache.

6. Arrangement d'éclairage selon la revendication 5, dans lequel au moins certains de ladite pluralité de bras de verrouillage (132c, 134c) sont configurés pour se mettre en prise avec au moins certaines desdites ouvertures (152c, 154c) dudit cache (128c) par le biais d'une connexion de verrouillage par encliquetage dans lequel lesdits au moins certains de ladite pluralité de bras de verrouillage sont configurés pour se déformer élastiquement durant leur passage à travers lesdites au moins certaines desdites ouvertures dudit cache et reprendre leur forme après leur passage à travers lesdites au moins certaines desdites ouvertures dudit cache.

7. Arrangement d'éclairage selon la revendication 5, dans lequel lesdites ouvertures (152c, 154c) sont configurées pour empêcher le déplacement de ladite pluralité de bras de verrouillage (132c, 134c) autour dudit axe longitudinal (112c).

8. Arrangement d'éclairage selon la revendication 1, dans lequel :
ladite partie de batterie de secours (14c) comprend en outre au moins une porte (82c) pouvant être ouverte dans le sens de la partie émettrice de lumière (12c) pour loger une desdites une ou plusieurs batteries ; et
ledit cache (128c) comprend en outre au moins une ouverture (160c), ladite au moins une porte pouvant être ouverte étant exposée à travers ladite au moins une ouverture.

9. Arrangement d'éclairage selon la revendication 1, comprenant en outre :
une diode électroluminescente (62c) ; et
un bouton de test (60c) en communication électronique avec ladite partie de batterie de secours (14c) et configuré de telle sorte qu'une pression dudit bouton de test (60c) mette ladite diode électroluminescente en communication électronique avec lesdites une ou plusieurs batteries de ladite partie de batterie de secours (14c), dans lequel ladite diode électroluminescente et ledit bouton de test sont montés dans ledit cache.

10. Arrangement d'éclairage selon la revendication 1, comprenant en outre :
une diode électroluminescente (62c) ; et
un bouton de test (60c) en communication électronique avec ladite partie de batterie de secours (14c) et configuré de telle sorte que la pression du bouton de test mette ladite diode électroluminescente en communication électronique avec lesdites une ou plusieurs batteries de ladite partie de batterie de secours (14c), dans lequel ladite diode électroluminescente et ledit bouton de test sont montés dans ladite partie de batterie de secours (14c).

11. Arrangement d'éclairage selon la revendication 1, comprenant en outre :
une diode électroluminescente (62c) ; et
un bouton de test (60c) en communication électronique avec ladite partie de batterie de secours (14c) et configuré de telle sorte que la pression du bouton de test mette ladite diode électroluminescente en communication électronique avec lesdites une ou plusieurs batteries de ladite partie de batterie de secours (14c), dans lequel ladite diode électroluminescente et ledit bouton de test sont montés dans ladite partie émettrice de lumière (12c).

12. Arrangement d'éclairage selon la revendication 1, dans lequel :
l'intensité lumineuse de la partie émettrice de lumière (12c) est variable.
